# EUROPÄISCHE PATENTSCHRIFT

(11) **EP 3 978 693 B1**
(45) Veröffentlichungstag und Bekanntmachung des Hinweises auf die Patenterteilung: **29.04.2026**
(21) Anmeldenummer: 20199447.2
(22) Anmeldetag: 30.09.2020
(51) Int. Cl.: E03B 7/00, E03B 9/08, F16K 31/46, F16K 37/00

(54) **MOBILE VORRICHTUNG UND VERFAHREN ZUM BEDIENEN EINER ARMATUR IM ERDEINBAU SOWIE NACHRÜSTARTIKEL UND MOBILER DREHSCHLÜSSEL**
MOBILE DEVICE AND METHOD FOR OPERATING AN UNDERGROUND FITTING AS WELL AS A RETROFIT ITEM AND MOBILE ROTARY KEY
DISPOSITIF MOBILE ET PROCÉDÉ DE FONCTIONNEMENT D'UNE ARMATURE DANS L'INSTALLATION ENTERRÉE AINSI QU'ARTICLE DE POST-ÉQUIPEMENT ET CLÉ DE SERRAGE MOBILE

(43) Veröffentlichungstag der Anmeldung: 06.04.2022
(73) Patentinhaber: Sacharowitz, Axel, 12307 Berlin (DE); Sacharowitz, Fabian, 12307 Berlin (DE); Sacharowitz, Steffen, 12307 Berlin (DE)
(72) Erfinder: Sacharowitz, Axel, 12307 Berlin (DE); Sacharowitz, Fabian, 12307 Berlin (DE); Sacharowitz, Steffen, 12307 Berlin (DE)
(74) Vertreter: Bittner, Thomas L.

(56) Entgegenhaltungen:
- WO-A1-2013/184863
- WO-A1-2020/118253
- US-A1- 2013 042 933
- US-A1- 2013 306 157
- US-A1- 2017 209 338
- US-A1- 2018 313 373
- US-A1- 2020 132 219

## Beschreibung

Die Erfindung betrifft eine mobile Vorrichtung und ein Verfahren zum Bedienen einer Armatur im Erdeinbau sowie einen Nachrüstartikel für einen mobilen Drehschlüssel für eine Armatur im Erdeinbau und einen mobilen Drehschlüssel.

### Hintergrund

Mobile Drehschlüssel werden genutzt, um Armaturen bei erdverlegten Rohrleitungen zu bedienen, beispielsweise Sperrventile zu öffnen und zu schließen, wenn die Armatur selbst auch im Erdeinbau angeordnet ist. Die Rohrleitungen können zum Beispiel Teil eines Wasser-, Gas- oder Fernwärmeversorgungsnetzes sein. Der mobile Drehschlüssel wird hierbei auf eine Kopplungsstelle der Armatur im Erdeinbau aufgesetzt, sei es direkt oder über ein Kopplungsgestänge, um die mittels des mobilen Drehschlüssels ausgeführte Drehbewegung auf die Armatur zu übertragen. Mobile Drehschlüssel können manuell oder mittels einer Antriebseinrichtung maschinell bedient werden.

Im Dokument EP 1 850 279 A1 ist eine Vorrichtung zum Bedienen von Armaturen im Erdeinbau offenbart. Es ist ein mobiles Drehgerät vorgesehen, welches drehfest mit einem Gestänge verbunden ist. An dem mobilen Drehgerät ist ein Aufnahmeteil angeordnet, welches mit einem ortsfesten, einer Bedienstelle der Armatur zugeordneten Aufnahmeteil zusammenwirkt. Das ortsfeste Aufnahmeteil ist innerhalb einer Straßenkappe angeordnet und so drehfest im umgebenden Erdreich verankert. Ein beim Bedienen der Armatur auftretendes Reaktionsmoment wird ohne Beanspruchung der Straßenkappe an das umgebende Erdreich abgegeben.

Im Dokument DE 10 2016 108 048 A1 ist ein Adapter für eine Antriebsstange zum Drehen von Armaturen für Rohrleitungen im Erdeinbau mit einer Bedienstelle offenbart, die das Öffnen und das Schließen der Armaturen ermöglicht. Die Armatur wird mittels eines Drehgeräts über die an der Bedienstelle im Erdreich angeordnete Antriebsstange unterschiedlicher Länge gedreht. Es ist ein Adapter für die Antriebsstange vorgeschlagen. Der Adapter der Antriebsstange ist auf der durch das Drehgerät bedienbaren Seite zur form- und / oder kraftschlüssigen Anordnung innerhalb der einer Mehrkantenaufnahme einer tragbaren Gewindeschneidmaschine ausgebildet, welche das Drehgerät darstellt.

Im Dokument DE 20 2010 004 100 U1 ist ein Adapter zum Arretieren eines mobilen Drehantriebs für erdverlegte Armaturen an einer verdreh sicheren Trageplatte für Straßenkappen offenbart, wobei der Adapter durch eine Straßenkappe hindurch passt und eine Verbindungsvorrichtung zur verdreh sicheren Trageplatte aufweist.

Im Dokument EP 307 33 37 A1 ist eine Stellvorrichtung für Armaturen in Versorgungsleitungen mit einem Stellantrieb oder einem mobilen Drehgerät offenbart, der / das einen Antrieb, eine Steuereinrichtung zum Steuern des Antriebs sowie einen Körperschall-Aufnehmer zum Messen des Körperschalls beinhaltet, der entsteht, wenn ein Medium durch die Armatur fließt oder die Armatur gestellt wird. Weiterhin ist eine Verarbeitungseinrichtung zum Auswerten des Signals des Körperschall-Aufnehmers vorgesehen.

Das Dokument US 2018 / 0 313 373 A1 betrifft eine elektronische Ausrüstung zum Überwachen von Ventilen eines Hydraulikkreises, wobei jedes Ventil zwischen einer offenen Position und einer geschlossenen Position bewegbar ist. Die Ausrüstung umfasst eine Vielzahl von elektronischen Vorrichtungen zum Erfassen von Positionsänderungen, wobei jedes mit einem Ventil verbunden ist und konfiguriert ist, eine Änderung der Position des Ventils zwischen seiner offenen und seiner geschlossenen Position zu detektieren, eine elektronische Vorrichtung zum Überwachen der Ventile und ein System zur Funkübertragung von Nachrichten zwischen jedem Detektionsgerät und dem Überwachungsgerät. Die Überwachungsvorrichtung ist dazu konfiguriert, eine Folge aufeinanderfolgender Änderungen von Ventilstellungen aus von den Erfassungsvorrichtungen über das Funkübertragungssystem empfangenen Nachrichten zu berechnen, um die berechnete Folge mit einer vordefinierten Folge zu vergleichen und ein Signal als Funktion des Vergleichs zu erzeugen.

Das Dokument US 2013 / 0 306 157 A1 offenbart ein Gasspülventil in einem Fluidsystem, wobei das Ventil mit einem oder mehreren Sensoren konfiguriert ist, von denen jeder ein oder mehrere Signale erfasst und erzeugt, die indikativ für dem Ventil zugeordnete Parameter sind. Das Fluidsystem umfasst ferner eine Stromquelle und ein Übertragungssystem zum Übertragen von Signalen von den Sensoren an eine Fernsteuerstation.

### Zusammenfassung

Aufgabe der Erfindung ist es, eine mobile Vorrichtung sowie ein Verfahren zum Bedienen einer Armatur im Erdeinbau sowie eine Messeinrichtung und einen mobilen Drehschlüssel mit einer Messeinrichtung anzugeben, die eine verbesserte und betriebssichere Bedienung der Armatur im Erdeinbau ermöglichen, um erdverlegte Rohrleitungsnetze effizienter betreiben zu können.

Zur Lösung sind eine mobile Vorrichtung zum Bedienen einer Armatur im Erdeinbau sowie ein Verfahren zum Bedienen einer Armatur im Erdeinbau nach den unabhängigen Ansprüchen 1 und 13 geschaffen. Ausgestaltungen sind Gegenstand von abhängigen Unteransprüchen.

Nach einem Aspekt ist eine mobile Vorrichtung zum Bedienen einer Armatur im Erdeinbau mit einem mobilen Drehschlüssel, der eingerichtet ist, eine Armatur im Erdeinbau zu bedienen; und einer Messeinrichtung geschaffen, die an dem mobilen Drehschlüssel angeordnet ist und Folgendes aufweist: eine Sensoreinrichtung, die eingerichtet ist, Messsignale zu erfassen, die Parameter einer Drehbewegung des mobilen Drehschlüssels beim Bedienen der Armatur anzeigen; und eine Sendeeinrichtung, die eingerichtet ist, die Messsignale anzeigende Messdaten mittels drahtloser Datenkommunikation zu senden. Die mobile Vorrichtung weist weiterhin ein mobiles Gerät auf, welches eingerichtet ist, unter Verwendung einer Software-Applikation, die mittels eines Prozessors des mobilen Geräts ausgeführt wird, die Messdaten von der Messeinrichtung zu empfangen und mittels einer Sendeeinrichtung an eine entfernte Datenbankeinrichtung zu senden.

Nach einem weiteren Aspekt ist ein Verfahren zum Bedienen einer Armatur im Erdeinbau mit einer mobilen Vorrichtung geschaffen, wobei das Verfahren Folgendes aufweist: Bereitstellen einer mobilen Vorrichtung mit einem mobilen Drehschlüssel und einer Messeinrichtung, die an dem mobilen Drehschlüssel angeordnet ist und eine Sensoreinrichtung sowie eine Sendeeinrichtung aufweist; Bedienen einer Armatur im Erdeinbau mittels Drehen des mobilen Drehschlüssels, welcher mit der Armatur verbunden ist; Erfassen von Messsignalen, die Parameter für die Drehbewegung des mobilen Drehschlüssels beim Bedienen der Armatur anzeigen, mittels der Sensoreinrichtung; Senden von die Messsignale anzeigenden Messdaten mittels drahtloser Datenkommunikation mit Hilfe der Sendeeinrichtung; Empfangen der Messdaten in einem mobilen Gerät unter Verwendung einer Software-Applikation, die mittels eines Prozessors des mobilen Geräts ausgeführt wird; und Senden der Messdaten mittels einer Sendeeinrichtung des mobilen Geräts an eine entfernte Datenbankeinrichtung.

Nach einem anderen Aspekt ist ein Nachrüstartikel (nachrüstbare Vorrichtung) für einen mobilen Drehschlüssel zum Bedienen einer Armatur im Erdeinbau geschaffen, welcher eine Messeinrichtung aufweist, die an einem mobilen Drehschlüssel montierbar ist und Folgendes umfasst: eine Sensoreinrichtung, die eingerichtet ist, Messsignale zu erfassen, die Parameter einer Drehbewegung des mobilen Drehschlüssels beim Bedienen der Armatur anzeigen; und eine Sendeeinrichtung, die eingerichtet ist, die Messsignale anzeigende Messdaten mittels drahtloser Datenkommunikation zu senden. Die Sensoreinrichtung und die Sendeeinrichtung können in einem Gehäuse aufgenommen, welches nachträglich an dem vorhandenen Drehschlüssel montierbar ist. Weiterhin ist ein mobiler Drehschlüssel zum Bedienen einer Armatur im Erdeinbau mit dem Nachrüstartikel geschaffen.

Die Ausstattung des mobilen Drehschlüssels mit der Messeinrichtung, wahlweise nachträglich, ermöglicht es, Armaturen, die für eine erdverlegte Versorgungsleitung selbst im Erdeinbau angeordnet sind, mit größerer Genauigkeit zu bedienen. Die Ausführung als Nachrüstartikel mit der Messeinrichtung ermöglicht es nachträglich vorhandene mobile Drehschlüssel mit der intelligenten Bedienbarkeit auszustatten, die mittels der nachgerüsteten Messeinrichtung für den Drehschlüssel bereitgestellt wird.

Die mit dem mobilen Drehschlüssel nach dem Koppeln an die Armatur ausgeführte Dreh- oder Rotationsbewegung zum Öffnen oder zum Schließen der Armatur wird mit Hilfe der Sensoreinrichtung detektiert. Die hierzu erfassten Messsignale zeigen Parameter der Drehbewegung des mobilen Drehschlüssels beim Bedienen der Armatur an. Die Messdaten, welche die Messsignale und somit die Parameter der Drehbewegung anzeigen, können dann von der Messeinrichtung des mobilen Drehschlüssels über das mobile Gerät an eine entfernte Datensammelstelle übertragen und dort in einer Datenbankeinrichtung gespeichert und wahlweise bearbeitet werden. Auf diese Weise ist zum Beispiel der aktuelle Betriebszustand der Armatur, insbesondere ein Öffnungs- oder Schließgrad, stets zentral erfassbar. Diese Informationen können für einen Großteil oder alle Armaturen eines Versorgungsnetzwerks erfasst werden, so dass an zentraler Stelle zusammenfassende Informationen über den Zustand der Armaturen verfügbar sind.

Es kann alternativ oder ergänzend vorgesehen sein, die Messdaten in dem mobilen Gerät selbst mittels des Prozessors zu verarbeiten oder zu bearbeiten, zum Beispiel unter Verwendung der Software-Applikation. Die Datenverarbeitung kann zum Beispiel umfassen, die Messdaten zu evaluieren und zu visualisieren. Hier durch kann dem Nutzer zum Beispiel angezeigt werden, wenn die Armatur zu schnell geschlossen wird, was in der Rohrleitung Druckstöße verursachen kann, die Rohrschäden führen können. An dem mobilen Gerät können die erfassten Parameter für die Drehbewegung angezeigt werden, zum Beispiel eine aktuelle Drehstellung und wahlweise eine Anzahl noch erforderlicher Drehungen zum Öffnen / Schließen der Armatur.

Die Messeinrichtung kann in einer Ausgestaltung als ein Nachrüstartikel für einen mobilen Drehschlüssel ausgeführt sein, zum Beispiel mit einer Ad-on-Box. Diese kann an vorhandenen mobilen Drehschlüsseln unterschiedlicher Bauart nachträglich oder auch schon bei der Fertigung angeordnet werden, um den Drehschlüssel so mit der Messeinrichtung auszustatten.

Der mobile Drehschlüssel kann einen Betätigungsabschnitt aufweisen, der vom Benutzer mit den Händen gegriffen werden kann und / oder mit einem maschinellen Antrieb verbindbar ist. Ein Kopplungsabschnitt des mobilen Drehschlüssels ist eingerichtet, an die Armatur im Erdeinbau direkt oder über ein Kopplungsbauteil oder -gestänge zu koppeln, um die mittels des mobilen Drehschlüssels ausgeführte Drehbewegung auf die Armatur zum Öffnen und zum Schließen zu übertragen, beispielsweise eine Spindel der Armatur. Der mobile Drehschlüssel kann in einer Ausgestaltung als mobiler T-Schlüssel ausgeführt sein.

Armaturen im Erdeinbau im hier verwendeten Sinne umfassen Armaturen von erdverlegten Rohrleitungen, wobei die Armatur in einem Schacht selbst unterhalb der Erdoberfläche oder in einem Schachtbauwerk angeordnet sein kann, welches wahlweise oberhalb der Erdoberfläche angeordnet ist.

Zum Erfassen eines oder mehrerer Parameter für die Drehbewegung des mobilen Drehschlüssels beim Bedienen der Armatur kann die Sensoreinrichtung in einer Ausführung mit mindestens einem Beschleunigungssensor ausgeführt sein. Grundsätzlich sind verschiedene Sensortypen verwendbar, die geeignet sind, Parameter für die Drehbewegung beim Bedienen der Armatur zu erfassen.

Die Sendeeinrichtung der Messeinrichtung kann eingerichtet sein, die die Messsignale anzeigenden Messdaten mittels Nah-Datenkommunikation zu senden. Für die Nah-Datenkommunikation können unterschiedliche als solche verfügbaren Techniken der Datenkommunikation zum Einsatz kommen. Diese bilden verschiedene Optionen für die Verwendung bei der Messeinrichtung des mobilen Drehschlüssels und unterscheiden sich beispielsweise hinsichtlich ihrer Reichweite. Es kann eine Technik für die Nah-Datenkommunikation vorgesehen sein, die eine Reichweite für die drahtlose Datenübertragung von bis zu etwa 100m hat. So kann die Bluetooth-Technik mit einer Reichweite zwischen etwa 10m und etwa 100m eingesetzt werden. Alternativ oder ergänzend kann die RFID-Technologie verwendet werden, die eine Reichweite von etwa 1m bis 10m aufweisen kann. Auch die Nahfelddatenkommunikation (NFC) mit einer Reichweite von nur bis zu etwa 10cm kann zum Einsatz kommen. So kann hierbei das mobile Gerät in unmittelbarer Nähe der Messeinrichtung gebracht werden, um die Messdaten auszulesen.

Die Sendeeinrichtung des mobilen Geräts kann eingerichtet sein, die die Messsignale anzeigenden Messdaten mittels Fern-Datenkommunikation zu senden. Von der Nah-Datenkommunikation ist die Fern-Datenkommunikation zu unterscheiden, die vorliegend eingesetzt wird, um die mit dem mobilen Gerät von der Messeinrichtung "eingesammelten" Messdaten an eine entfernte Datensammelstelle (Datenbankeinrichtung) zu übertragen, um die Messdaten dort zu erfassen und zu speichern sowie wahlweise auszuwerten. Die Fern-Datenkommunikation hat eine im Vergleich zum Nah-Datenkommunikation eine größere Reichweite. Zum Einsatz kommen kann zum Beispiel die GSM-Funktechnologie. Hierbei haben GSM-Funkzellen eine Reichweite (Radius) von bis zu etwa 10km. Andere Fern-Datenkommunikations-Techniken erreichen noch größere Reichweiten. Das mobile Gerät, mit dem die Messdaten von der Messeinrichtung am mobilen Drehschlüssel über die Nah-Datenkommunikation empfangen werden, bildet insoweit eine Schnitt- und Übertragungsstelle für die Fernübermittlung der Messdaten an die entfernte Datenbankeinrichtung.

Die Sensoreinrichtung kann eingerichtet sein, Messsignale für mindestens einen Paramater der Drehbewegung des mobilen Drehschlüssels beim Bedienen der Armatur aus der folgenden Gruppe zu erfassen: Anfangsdrehstellung, Enddrehstellung, , momentane Drehstellung, Drehgeschwindigkeit und Anzahl von ausgeführten Drehungen. Einzelne oder mehrere der Parameter können während des Bedienens der Armatur mittels Drehen des mobilen Drehschlüssels dauerhaft oder zeitweise erfasst werden. Die Anfangsdrehstellung zeigt die Stellung der Armatur zum Beginn des aktuellen Bedienvorgangs an. Die Endstellung bezieht sich dann auf das Ende der Drehbewegung. Während des Bedienens (Drehens) kann die momentane Drehstellung in bestimmten Zeitabständen oder kontinuierlich mittels der Sensoreinrichtung detektiert werden. Die Drehgeschwindigkeit für das Drehen des mobilen Drehschlüssels kann als Momentanwert und / oder als Durchschnittswert für einen Bedienvorgang erfasst werden.

Die Sensoreinrichtung kann eingerichtet sein, eine Drehstellung des mobilen Drehschlüssels beim Bedienen der Armatur mit einer Winkelgenauigkeit von etwa + / - 20 Grad zu erfassen. Alternativ kann vorgesehen sein, die Dreh- oder Rotationsstellung des mobilen Drehschlüssels, welche eine Drehstellung für die Armatur anzeigt, kann mit einer Winkelgenauigkeit von etwa + / - 15 Grad oder weniger bestimmbar sein, insbesondere einer Winkelgenauigkeit von etwa + / - 10 Grad.

Die Messeinrichtung kann eine Benutzerschnittstelle mit einer Anzeigeeinrichtung aufweisen. Die Anzeigeeinrichtung kann mit einem Prozessor der Messeinrichtung verbunden sein. Über die Anzeigeeinrichtung können dem Benutzer verschiedene Informationen zur Anzeige gebracht werden, insbesondere die für die Drehbewegung beim Bedienen der Armatur erfassten Parameter. Auf diese Weise kann der Benutzer fortdauernd während des Bedienens der Armatur über den aktuellen Stand des Bedienvorgangs informiert werden. Über die Anzeigeeinrichtung können auch Warnsignale an den Benutzer ausgegeben werden, beispielweise beim Erreichen einer Anfangs- oder Enddrehstellung für die Armatur, um so eine Beschädigung der Armatur durch Weiterdrehen zu vermeiden.

Die Benutzerschnittstelle kann eine Eingabeeinrichtung aufweisen, die eingerichtet ist, Benutzereingaben zu empfangen. Für das Empfangen von Benutzereingaben kann die Benutzerschnittstelle Eingabetasten und / oder berührungssensitive Eingabeflächen aufweisen. Zum Beispiel kann der Benutzer auf diese Weise das Senden der Messdaten beeinflussen. So kann vorgesehen sein, dem Benutzer mittels einer Benutzerausgabe zu informieren, dass die Messdaten zur Übersendung an das mobile Gerät bereitstellen. Es kann vorgesehen sein, dass das Senden der Messdaten dann erst stattfindet als Reaktion auf eine entsprechende Benutzereingabe, die dieses bestätigt.

Die Messeinrichtung kann an dem mobilen Drehschlüssel lösbar angeordnet sein. Hierbei kann vorgesehen sein, dass an dem mobilen Drehschlüssel eine Buchse oder ein Stecksockel angeordnet ist, auf die / den die Messeinrichtung lösbar aufsteckbar oder aufgeschoben ist. Auf diese Weise ist es beispielsweise ermöglicht, die Messeinrichtung von dem mobilen Drehschlüssel während des Transports zu lösen. Auch wird hierdurch die Möglichkeit geschaffen, ein und dieselbe Messeinrichtung an verschiedenen Drehschlüsseln zu verwenden.

Der mobile Drehschlüssel kann eingerichtet sein, beim Bedienen der Armatur wenigstens einer der folgenden Betriebsarten entsprechend bedient zu werden: manueller Betrieb und maschineller Betrieb mittels einer an den mobilen Drehschlüssel koppelnden Antriebseinrichtung. Beim manuellen Betrieb wird der mobile Drehschlüssel vom Benutzer mit einer oder beiden Händen gegriffen, um den mobilen Drehschlüssel manuell zu drehen. Beim maschinellen Betrieb wird die Antriebseinrichtung genutzt, um die Drehbewegung auszuführen. Hierzu kann ein Kopplungsmechanismus vorgesehen sein, um die Antriebseinrichtung an den Drehschlüssel zu koppeln.

Die Messeinrichtung kann eine Empfangseinrichtung aufweisen, die eingerichtet ist, Betriebsdaten mittels der drahtlosen Datenkommunikation zu empfangen. Es kann eine integrierte Sende- / Empfangseinrichtung (Transceiver) vorgesehen sein. Die Betriebsdaten können nach dem Empfang in der Messeinrichtung dem Benutzer teilweise über die Anzeigeeinrichtung zur Kenntnis gebracht werden. Zu den Betriebsdaten können zum Beispiel Armaturendaten gehören, welche Eigenschaften der zu bedienenden Armatur anzeigen, beispielsweise Armaturentyp, zulässige Drehrichtung zum Öffnen, zulässige Drehrichtung zum Schließen sowie eine Anzahl von Drehungen, die zum Öffnen oder zum Schließen notwendig sind. Andere auf diese Weise an die Messeinrichtung übermittelte elektronische Daten können Leitungsdaten für die erdverlegte Versorgungsleitung betreffen, zum Beispiel Rohrmaterial und / oder Rohrdurchmesser. Die Übermittlung der Betriebsdaten kann von dem mobilen Gerät erfolgen, welches diese aus einem lokalen Speicher in dem mobilen Gerät oder von der entfernten Datenbankeinrichtung empfangen hat. Das Übertragen der Betriebsdaten an die Messeinrichtung kann unter Verwendung der Software-Applikation ausgeführt werden, die auf dem mobilen Gerät läuft. In einer Ausführung kann die Empfangseinrichtung eingerichtet sein, Signale oder Daten alternativ oder ergänzend von anderen Datenspeichern zu empfangen, also alternativ oder ergänzend zur Übertragung von dem mobilen Gerät, der an der Armatur nageordnet sein kann, zum Beispiel einem RFID Chip.

Die Software-Applikation kann eingerichtet sein, dem Benutzer auf dem mobilen Gerät ein Bedienmenü für den Datenaustausch mit der Messeinrichtung am mobilen Drehschlüssel sowie die Datenkommunikation mit der entfernten Datenbankeinrichtung bereitzustellen. Beispielsweise kann vorgesehen sein, dass der Benutzer über eine Benutzerschnittstelle des mobilen Geräts eine aktuell zu bedienende Armatur im Erdeinbau in einem Versorgungsnetz auswählen kann. Hierdurch ist dann sichergestellt, dass die erfassten Messdaten für die aktuell ausgewählte Armatur gespeichert werden. Ebenso ist es hierdurch ermöglicht, Betriebsdaten für die aktuell ausgewählte Armatur bereitzustellen und an die Messeinrichtung zu übermitteln.

Die Messeinrichtung kann ein schmutz- und wasserdichtes Gehäuse aufweisen, in welchem die Sensoreinrichtung und die Sendeeinrichtung aufgenommen sind. In das Schmutz- und Wasserdichte Gehäuse kann auch die Empfangseinrichtung der Messeinrichtung integriert sein.

Die Messeinrichtung kann eine lokale Spannungsversorgung aufweisen. Beispielsweise umfasst die lokale Spannungsversorgung mindestens eine Batterie oder wenigstens einen Ackumulator.

Bei der mobilen Vorrichtung kann die Messeinrichtung eine weitere Sensoreinrichtung aufweisen, die eingerichtet ist, Schwingungsmesssignale für die Armatur zu erfassen. Die Schwingungsmessung kann Hinweise darauf geben, ob die Armatur dicht ist oder nicht.

Wenn die Armatur zum Beispiel (noch) von Wasser durchströmt wird, entstehen Schwingungen, die so gemessen werden können. Beispielweise kann die weitere Sensoreinrichtung ein Mikrofon umfassen. Die weitere Sensoreinrichtung kann einen Schallsensor aufweisen.

Das mobile Gerät kann aus der folgenden Gruppe ausgewählt sein: Mobiltelefon, Laptop-Computer und Tablet-Computer. Solche mobilen Geräte sind geeignet, im Feldeinsatz im Nahfeld des mobilen Drehschlüssels die Messdaten von der Messeinrichtung zu empfangen und mittels der Fern-Datenkommunikation weiterzugeben.

Die mobile Vorrichtung, die wahlweise mittels des Nachrüstartikels gebildet ist, ermöglicht es in einer Ausgestaltung insbesondere, die Drehposition der Armaturen und die Drehgeschwindigkeit bei der Betätigung mit dem mobilen Drehschlüssel fortlaufend zu erfassen und diese Daten kabellos an das mobile Gerät zu übermitteln.

Die vorangehend im Zusammenhang mit der mobilen Vorrichtung erläuterten Ausgestaltungen können im Zusammenhang mit dem mobilen Drehschlüsse und / oder dem Verfahren zum Bedienen der Armatur im Erdeinbau entsprechend vorgesehen sein.

### Beschreibung von Ausführungsbeispielen

Im Folgenden werden weitere Ausführungsbeispiele unter Bezugnahme auf Figuren einer Zeichnung näher erläutert. Hierbei zeigen:
- Fig. 1: eine schematische Darstellung einer Anordnung mit einer mobilen Vorrichtung zum Bedienen einer Armatur im Erdeinbau mit einem manuell bedienten mobilen Drehschlüssel;
- Fig. 2: eine schematische Darstellung einer Anordnung mit einer mobilen Vorrichtung zum Bedienen einer Armatur im Erdeinbau mit einem maschinell betriebenen mobilen Drehschlüssel und
- Fig. 3: eine schematische Darstellung von Funktionskomponenten der Messeinrichtung für einen mobilen Drehschlüssel.

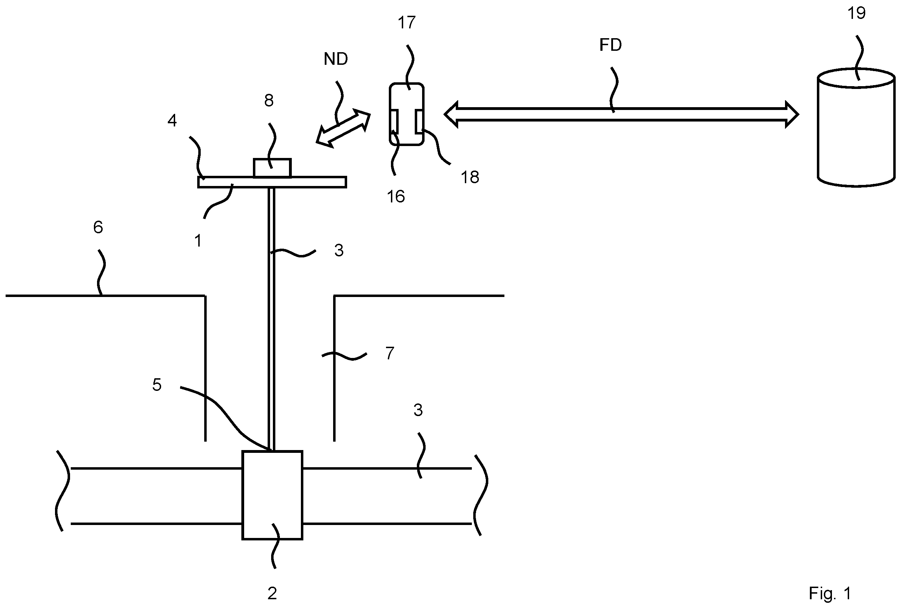

Fig. 1 zeigt eine schematische Darstellung einer Anordnung mit einer mobilen Vorrichtung 1 zum Bedienen einer Armatur 2 an einer erdverlegten Versorgungsleitung 3. Die mobile Vorrichtung 1 umfasst einen mobilen Drehschlüssel 4, der über eine Kopplungsstelle 5 an die Armatur 2 im Erdeinbau koppelt, derart, dass die Armatur 2 mittels Drehen des mobilen Drehschlüssels 4 zum Öffnen und zum Schließen bedient werden kann. Mittels Öffnen und Schließen der Armatur 2 kann die Versorgungsleitung 3 geöffnet und geschlossen werden, so dass beispielsweise ein Wasser- oder Gasfluss durch die Rohrleitung der Versorgungsleitung 3 zugelassen oder unterbunden wird.

Die Armatur 2 und die Versorgungsleitung 3 sind im gezeigten Beispiel unterhalb der Erdoberfläche 6 in der Erde verlegt. Es kann vorgesehen sein, einen Zugang 7 (Schacht) im Bereich der Erdoberfläche 6 mit einer Straßenkappe oder anderen Abdeckung (nicht dargestellt) zu verschließen, wenn die Armatur 2 nicht zu bedienen ist.

Es kann vorgesehen sein, dass die Armatur 2 im Unterschied zum gezeigten Ausführungsbeispiel nicht im Erdreich selbst eingebaut ist, sondern zum Beispiel in einem Schachtbauwerk, welches oberhalb der Erdoberfläche 6 angeordnet ist.

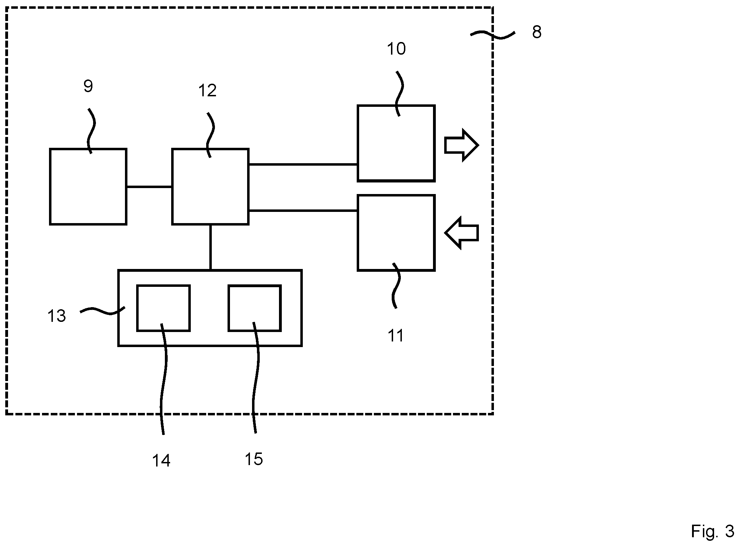

An dem mobilen Drehschlüssel 4 ist eine Messeinrichtung 8 angeordnet, sei es lösbar oder nicht lösbar, zum Beispiel als für den mobilen Drehschlüssel 4 nachgerüstete Einrichtung. Fig. 3 zeigt eine schematische Darstellung von Funktionskomponenten der Messeinrichtung 8. Danach weist die Messeinrichtung 8 eine Sensoreinrichtung 9, eine Sendeeinrichtung 10 sowie eine Empfangseinrichtung 11 auf. Weiterhin ist ein Steuermodul 12, welches zum Beispiel ein oder mehrere Prozessoren umfasst, mit einer Benutzerschnittstelle 13 verbunden, die eine Anzeigeeinrichtung 14 und eine (optionale) Einrichtung 15 zum Empfangen von Benutzereingaben aufweist.

Mit Hilfe der Sensoreinrichtung 9, die beispielsweise mit einem oder mehreren Beschleunigungssensoren gebildet ist, werden Parameter für eine Drehbewegung des mobilen Drehschlüssels 4 beim Bedienen der Armatur 2 erfasst. Die mit Hilfe der Sensoreinrichtung 9 erfassten Messsignale können hierbei einen oder mehreren der folgenden Parameter anzeigen: Anfangsdrehstellung, Enddrehstellung, Drehrichtung, momentane Drehstellung, Drehgeschwindigkeit und Anzahl von ausgeführten Drehungen.

Auf das Erfassen der Messdaten werden Messsignale, die die Messdaten anzeigen, über die Sendeeinrichtung 10 mittels Nah-Datenkommunikation ND an eine Empfangseinrichtung 16 eines mobilen Geräts 17 übermittelt. Bei dem mobilen Gerät 17 kann es sich beispielsweise um ein Mobiltelefon, einen Laptop-Computer oder einen Tablet-Computer handeln, auf dem eine Software-Applikation läuft. Die von der Messeinrichtung 8 empfangenen Messdaten können dann teilweise oder vollständig mittels Fern-Datenkommunikation FD über eine Sendeeinrichtung 18 des mobilen Geräts 17 an eine entfernte Datenbankeinrichtung 19 übermittelt und dort gespeichert werden. Auf diese Weise können für die zu bedienende Armatur 2 aktuelle Betriebsparameter zentral erfasst werden. Die Empfangseinrichtung 16 und / oder die Sendeeinrichtung 18 können als Transceiver zum Senden und Empfangen ausgeführt sein.

Umgekehrt ermöglicht es die Datenkommunikation zur Messeinrichtung 8 vorhandene Betriebsdaten für die Armatur 2 zu übermitteln und diese wahlweise über die Anzeigeeinrichtung 13 dem Benutzer zur Kenntnis zu bringen. Hierbei kann es sich beispielsweise um Informationen betreffend einen Armaturentyp und / oder einen Öffnungs- / Schließzustand für die Armatur 2 handeln.

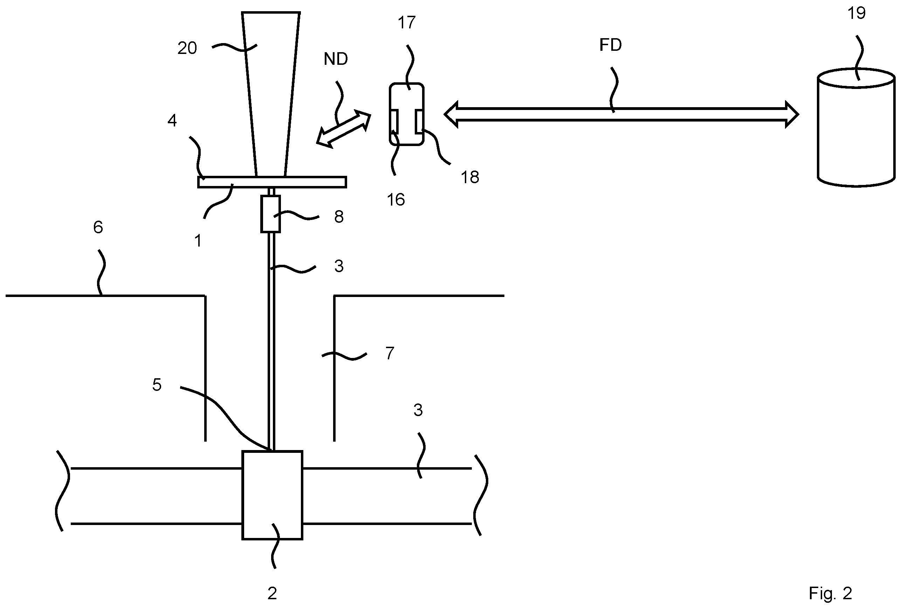

Fig. 2 zeigt eine schematische Darstellung einer Anordnung für die mobile Vorrichtung, bei der im Unterschied zur Fig. 1 der mobile Drehschlüssel 4 mittels einer Antriebseinrichtung 20 maschinell angetrieben wird, wie dieses als solches bekannt ist.

Die in der vorstehenden Beschreibung, den Ansprüchen sowie der Zeichnung offenbarten Merkmale können sowohl einzeln als auch in beliebiger Kombination für die Verwirklichung der verschiedenen Ausführungen von Bedeutung sein.

## Patentansprüche

1. Mobile Vorrichtung (1) zum Bedienen einer Armatur (2) im Erdeinbau, mit
- einem mobilen Drehschlüssel (4) mit einem Nachrüstartikel, der eine Messeinrichtung (8) aufweist, die an dem mobilen Drehschlüssel (4) montierbar ist und Folgendes aufweist:
- eine Sensoreinrichtung (9), die eingerichtet ist, Messsignale zu erfassen, die Parameter einer Drehbewegung eines mobilen Drehschlüssels (4) beim Bedienen einer Armatur (2) anzeigen; und
- eine Sendeeinrichtung (10), die eingerichtet ist, die Messsignale anzeigende Messdaten mittels drahtloser Datenkommunikation zu senden; und
- einem mobilen Gerät (17), welches eingerichtet ist, unter Verwendung einer Software-Applikation, die mittels eines Prozessors des mobilen Geräts (17) ausgeführt wird, die Messdaten von der Messeinrichtung (8) zu empfangen und mittels einer Sendeeinrichtung (18) an eine entfernte Datenbankeinrichtung (19) zu senden.

2. Mobile Vorrichtung (1) nach Anspruch 1, **dadurch gekennzeichnet, dass** Messeinrichtung (8) eingerichtet ist, die die Messsignale anzeigenden Messdaten mittels Nah-Datenkommunikation zu senden.

3. Mobile Vorrichtung (1) nach Anspruch 1 oder 2, **dadurch gekennzeichnet, dass** die Sendeeinrichtung des mobilen Geräts (17) eingerichtet ist, die die Messsignale anzeigenden Messdaten mittels Fern-Datenkommunikation zu senden.

4. Mobile Vorrichtung (1) nach mindestens einem der vorangehenden Ansprüche, **dadurch gekennzeichnet, dass** die Sensoreinrichtung (9) eingerichtet ist, Messsignale für mindestens einen Paramater der Drehbewegung des mobilen Drehschlüssels (4) beim Bedienen der Armatur (2) aus der folgenden Gruppe zu erfassen: Anfangsdrehstellung, Enddrehstellung, Drehrichtung, momentane Drehstellung, Drehgeschwindigkeit und Anzahl von ausgeführten Drehungen.

5. Mobile Vorrichtung (1) nach mindestens einem der vorangehenden Ansprüche, **dadurch gekennzeichnet, dass** die Sensoreinrichtung (9) eingerichtet ist, eine Drehstellung des mobilen Drehschlüssels (4) beim Bedienen der Armatur (2) mit einer Winkelgenauigkeit von etwa + / - 20 Grad zu erfassen.

6. Mobile Vorrichtung (1) nach mindestens einem der vorangehenden Ansprüche, **dadurch gekennzeichnet, dass** die Messeinrichtung (8) eine Benutzerschnittstelle (13) mit einer Anzeigeeinrichtung (14) aufweist.

7. Mobile Vorrichtung (1) nach Anspruch 6, **dadurch gekennzeichnet, dass** die Benutzerschnittstelle (13) eine Eingabeeinrichtung (15) aufweist, die eingerichtet ist, Benutzereingaben zu empfangen.

8. Mobile Vorrichtung (1) nach mindestens einem der vorangehenden Ansprüche, **dadurch gekennzeichnet, dass** die Messeinrichtung (8) an dem mobilen Drehschlüssel (4) lösbar angeordnet ist.

9. Mobile Vorrichtung (1) nach mindestens einem der vorangehenden Ansprüche, **dadurch gekennzeichnet, dass** der mobile Drehschlüssel (4) eingerichtet ist, beim Bedienen der Armatur (2) wenigstens einer der folgenden Betriebsarten entsprechend bedient zu werden: manueller Betrieb und maschineller Betrieb mittels einer an den mobilen Drehschlüssel (4) koppelnden Antriebseinrichtung (20).

10. Mobile Vorrichtung (1) nach mindestens einem der vorangehenden Ansprüche, **dadurch gekennzeichnet, dass** die Messeinrichtung (8) eine Empfangseinrichtung (11) aufweist, die eingerichtet ist, Betriebsdaten mittels der drahtlosen Datenkommunikation zu empfangen.

11. Mobile Vorrichtung (1) nach mindestens einem der vorangehenden Ansprüche, **dadurch gekennzeichnet, dass** die Messeinrichtung (8) ein schmutz- und wasserdichtes Gehäuse aufweist, in welchem die Sensoreinrichtung (9) und die Sendeeinrichtung (10) aufgenommen sind.

12. Mobile Vorrichtung (1) nach mindestens einem der vorangehenden Ansprüche, **dadurch gekennzeichnet, dass** die Messeinrichtung (8) eine weitere Sensoreinrichtung aufweist, die eingerichtet ist, Schwingungsmesssignale für die Armatur (2) zu erfassen.

13. Verfahren zum Bedienen einer Armatur (2) im Erdeinbau mit einer mobilen Vorrichtung (1), aufweisend:
- Bereitstellen einer mobilen Vorrichtung (1) mit einem mobilen Drehschlüssel (4) und einer Messeinrichtung (8), die an dem mobilen Drehschlüssel (4) angeordnet ist und eine Sensoreinrichtung (9) sowie eine Sendeeinrichtung (10) aufweist;
- Bedienen einer Armatur (2) im Erdeinbau mittels Drehen des mobilen Drehschlüssels (4), welcher mit der Armatur (2) verbunden ist;
- Erfassen von Messsignalen, die Parameter für die Drehbewegung des mobilen Drehschlüssels (4) beim Bedienen der Armatur (2) anzeigen, mittels der Sensoreinrichtung (9);
- Senden von die Messsignale anzeigenden Messdaten mittels drahtloser Datenkommunikation mit Hilfe der Sendeeinrichtung (10);
- Empfangen der Messdaten in einem mobilen Gerät (17) unter Verwendung einer Software-Applikation, die mittels eines Prozessors des mobilen Geräts (17) ausgeführt wird; und
- Senden der Messdaten mittels einer Sendeeinrichtung (18) des mobilen Geräts (17) an eine entfernte Datenbankeinrichtung (19).

## Claims

1. A mobile equipment (1) for operating an earth-mounted valve (2), comprising
- a mobile wrench (4) with a retrofit article, which wrench has a measuring device (8) which can be mounted on the mobile wrench (4) and comprises the following:
- a sensor device (9) which is configured to acquire measurement signals which indicate parameters of a rotational movement of a mobile wrench (4) when operating a valve (2); and
- a transmitting device (10) which is configured to transmit measurement data indicating the measurement signals by means of wireless data communication; and
- a mobile device (17) which is configured, using a software application which is executed by means of a processor of the mobile device (17), to receive the measurement data from the measuring device (8) and to transmit said measurement data to a remote database device (19) by means of a transmitting device (18).

2. The mobile equipment (1) according to Claim 1, **characterized in that** the measuring device (8) is configured to transmit the measurement data indicating the measurement signals by means of near-field data communication.

3. The mobile equipment (1) according to Claim 1 or 2, **characterized in that** the transmitting device of the mobile device (17) is configured to transmit the measurement data indicating the measurement signals by means of remote-field data communication.

4. The mobile equipment (1) according to at least one of the preceding claims, **characterized in that** the sensor device (9) is configured to acquire measurement signals for at least one parameter of the rotational movement of the mobile wrench (4) when operating the valve (2) from the following group: initial rotational position, final rotational position, direction of rotation, current rotational position, rotational speed and number of rotations carried out.

5. The mobile equipment (1) according to at least one of the preceding claims, **characterized in that** the sensor device (9) is configured to acquire a rotational position of the mobile wrench (4) when operating the valve (2) with an angular accuracy of approximately +/- 20 degrees.

6. The mobile equipment (1) according to at least one of the preceding claims, **characterized in that** the measuring device (8) has a user interface (13) with a display device (14).

7. The mobile equipment (1) according to Claim 6, **characterized in that** the user interface (13) has an input device (15) which is configured to receive user inputs.

8. The mobile equipment (1) according to at least one of the preceding claims, **characterized in that** the measuring device (8) is detachably arranged on the mobile wrench (4).

9. The mobile equipment (1) according to at least one of the preceding claims, **characterized in that** the mobile wrench (4) is configured to be operated corresponding to at least one of the following operating modes when operating the valve (2): manual operation and automatic operation by means of a drive device (20) coupling to the mobile wrench (4).

10. The mobile equipment (1) according to at least one of the preceding claims, **characterized in that** the measuring device (8) has a receiving device (11) which is configured to receive operating data by means of the wireless data communication.

11. The mobile equipment (1) according to at least one of the preceding claims, **characterized in that** the measuring device (8) has a dirt-tight and watertight housing in which the sensor device (9) and the transmitting device (10) are accommodated.

12. The mobile equipment (1) according to at least one of the preceding claims, **characterized in that** the measuring device (8) has a further sensor device which is configured to acquire vibration measurement signals for the valve (2).

13. A method for operating an earth-mounted valve (2) with a mobile equipment (1), comprising:
- providing a mobile equipment (1) with a mobile wrench (4) and a measuring device (8) which is arranged on the mobile wrench (4) and comprises a sensor device (9) and a transmitting device (10);
- operating an earth-mounted valve (2) by rotating the mobile wrench (4) which is connected to the valve (2);
- acquiring measurement signals which indicate parameters for the rotational movement of the mobile wrench (4) when operating the valve (2) by means of the sensor device (9);
- transmitting measurement data indicating the measurement signals by means of wireless data communication with the aid of the transmitting device (10);
- receiving the measurement data in a mobile device (17) using a software application which is executed by means of a processor of the mobile device (17); and
- transmitting the measurement data to a remote database device (19) by means of a transmitting device (18) of the mobile device (17).

## Revendications

1. Dispositif mobile (1) destiné à l'utilisation d'un système de robinetterie (2) dans une implantation dans le sol, avec
- une clé rotative mobile (4) avec un élément d'adaptation, qui comporte un système de mesure (8), qui peut être monté sur la clé rotative mobile (4) et comporte les éléments suivants :
- un système de détection (9), qui est agencé pour saisir des signaux de mesure, pour afficher les paramètres d'un mouvement de rotation d'une clé rotative mobile (4) lors de l'utilisation d'un système de robinetterie (2) ; et
- un système d'émission (10), qui est agencé pour envoyer les données de mesure affichant les signaux de mesure au moyen de la communication de données sans fil ; et
- un appareil mobile (17), lequel est agencé pour recevoir les données de mesure du système de mesure (8) en utilisant une application de logiciel, qui est exécutée au moyen d'un processeur de l'appareil mobile (17) et les envoyer à un système de banque de données (19) éloignée au moyen d'un système d'émission (18).

2. Dispositif mobile (1) selon la revendication 1, **caractérisé en ce que** le système de mesure (8) est agencé pour envoyer les données de mesure affichant les signaux de mesure au moyen d'une communication de données proche.

3. Dispositif mobile (1) selon la revendication 1 ou 2, **caractérisé en ce que** le système d'émission de l'appareil mobile (17) est agencé pour envoyer les données de mesure affichant les signaux de mesure au moyen d'une télécommunication de données.

4. Dispositif mobile (1) selon au moins l'une quelconque des revendications précédentes, **caractérisé en ce que** le système de détection (9) est agencé pour saisir des signaux de mesure pour au moins un paramètre du mouvement de rotation de la clé rotative mobile (4) lors de l'utilisation du système de robinetterie (2) à partir du groupe suivant : position de rotation initiale, position de rotation finale, sens de rotation, position de rotation momentanée, vitesse de rotation et nombre de rotations effectuées.

5. Dispositif mobile (1) selon au moins l'une quelconque des revendications précédentes, **caractérisé en ce que** le système de détection (9) est agencé pour saisir une position de rotation de la clé rotative mobile (4) lors de l'utilisation du système de robinetterie (2) avec une précision angulaire d'environ +/- 20 degrés.

6. Dispositif mobile (1) selon au moins l'une quelconque des revendications précédentes, sachant que le système de mesure (8) comporte une interface d'utilisateur (13) avec un système d'affichage (14).

7. Dispositif mobile (1) selon la revendication 6, **caractérisé en ce que** l'interface d'utilisateur (13) comporte un système d'entrée (15), qui est agencé pour recevoir des entrées d'utilisateur.

8. Dispositif mobile (1) selon au moins l'une quelconque des revendications précédentes, **caractérisé en ce que** le système de mesure (8) est disposé de façon amovible sur la clé rotative mobile (4).

9. Dispositif mobile (1) selon au moins l'une quelconque des revendications précédentes, **caractérisé en ce que** la clé rotative mobile (4) est agencée pour qu'au moins un des types d'utilisation suivants puisse être utilisé en conséquence lors de l'utilisation du système de robinetterie (2) : fonctionnement manuel, fonctionnement mécanisé au moyen d'un système d'entraînement (20) couplé à la clé rotative mobile (4).

10. Dispositif mobile (1) selon au moins l'une quelconque des revendications précédentes, **caractérisé en ce que** le système de mesure (8) comporte un système de réception (11), qui est agencé pour recevoir les données de fonctionnement au moyen de la communication de données sans fil.

11. Dispositif mobile (1) selon au moins l'une quelconque des revendications précédentes, **caractérisé en ce que** le système de mesure (8) comporte un boîtier étanche à la poussière et à l'eau dans lequel sont logés le système de détection (9) et le système d'émission (10).

12. Dispositif mobile (1) selon au moins l'une quelconque des revendications précédentes, **caractérisé en ce que** le système de mesure (8) comporte un autre système de détection qui est agencé pour saisir les signaux de mesure de vibrations pour le système de robinetterie (2).

13. Procédé destiné à l'utilisation d'un système de robinetterie (2) dans une implantation dans le sol avec un dispositif mobile (1), comportant :
- fourniture d'un dispositif mobile (1) avec une clé rotative mobile (4) et un système de mesure (8), qui est disposé sur la clé rotative mobile (4) et comporte un système de détection (9) ainsi qu'un système d'émission (10) ;
- manipulation d'un système de robinetterie (2) dans une implantation dans le sol au moyen de la rotation de la clé rotative mobile (4), laquelle est reliée au système de robinetterie (2) ;
- saisie de signaux de mesure, qui affichent les paramètres pour le mouvement de rotation de la clé rotative mobile (4) lors de la manipulation du système de robinetterie (2), au moyen du système de détection (9) ;
- émission des données de mesure affichant les signaux de mesure au moyen d'une communication de données sans fil à l'aide du système d'émission (10) ;
- réception des données de mesure dans un appareil mobile (17) en utilisant une application de logiciel, qui est exécutée au moyen d'un processeur de l'appareil mobile (17) ; et
- émission des données de mesure au moyen d'un système d'émission (18) de l'appareil mobile (17) à un système de banque de données (19) éloigné.
